# EUROPEAN PATENT SPECIFICATION

(11) **EP 3 201 473 B1**
(45) Date of publication and mention of the grant of the patent: **27.05.2020**
(21) Application number: 15790251.1
(22) Date of filing: 29.09.2015
(51) Int. Cl.: F15B 5/00, F15B 17/00, F15B 11/10, G01L 19/00

(54) **CIRCUIT COMPRISING A PRESSURE COMPENSATOR FOR OLEODYNAMIC APPLICATIONS**
SCHALTUNG UMFASSEND EINEN DRUCKAUSGLEICHER FÜR OLEODYNAMISCHE ANWENDUNGEN
CIRCUIT COMPRENANT UN COMPENSATEUR DE PRESSION POUR APPLICATIONS OLÉODYNAMIQUES

(30) Priority: 02.10.2014 IT MI20141724
(43) Date of publication of application: 09.08.2017
(73) Proprietor: Well Equipments International S.r.l., 29017 Fiorenzuola D'arda - Piacenza (IT)
(72) Inventor: PEVERI, Luigi, 29017 Fiorenzuola d'Arda (PC) (IT)
(74) Representative: Rastelli, Franco
(86) International application number: PCT/IB2015/001722
(87) International publication number: WO 2016/051253

(56) References cited:
- DE-A1- 2 926 039
- US-A- 3 170 379
- US-A- 4 715 230

## Description

### BACKGROUND OF THE INVENTION

The present invention relates to a **circuit with** pressure compensator, for oleodynamic applications.

As is known, for controlling the operation of oleodynamic cylinders, pressure gauges are conventionally used.

The connection of a pressure gauge to an oleodynamic cylinder involves great problems due to the high operating pressures and a need of protecting the pressure gauge.

A conventional type of pressure gauge must be provided with a safety valve and a pressure compensating membrane.

**A prior art circuit is known from Document** DE 29 26 039 A1**.**

### SUMMARY OF THE INVENTION

The aim of the present invention is to provide a pressure compensator, for oleodynamic applications, allowing to connect a pressure gauge to an oleodynamic cylinder with high operating pressures.

Within the scope of the above mentioned aim, a main object of the invention is to provide such a pressure compensator which, as it is arranged between an oleodynamic cylinder and a pressure gauge, allows to display on said pressure gauge precise or accurate pressure values.

Another object of the present invention is to provide such a pressure compensator which, owing to its specifically designed structural features, is very reliable and safe in operation.

According to one aspect of the present invention, the above mentioned aim and objects, as well as yet other objects which will become more apparent hereinafter, are achieved by a circuit according to claim 1.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative but not limitative example, in the accompanying drawings, where:

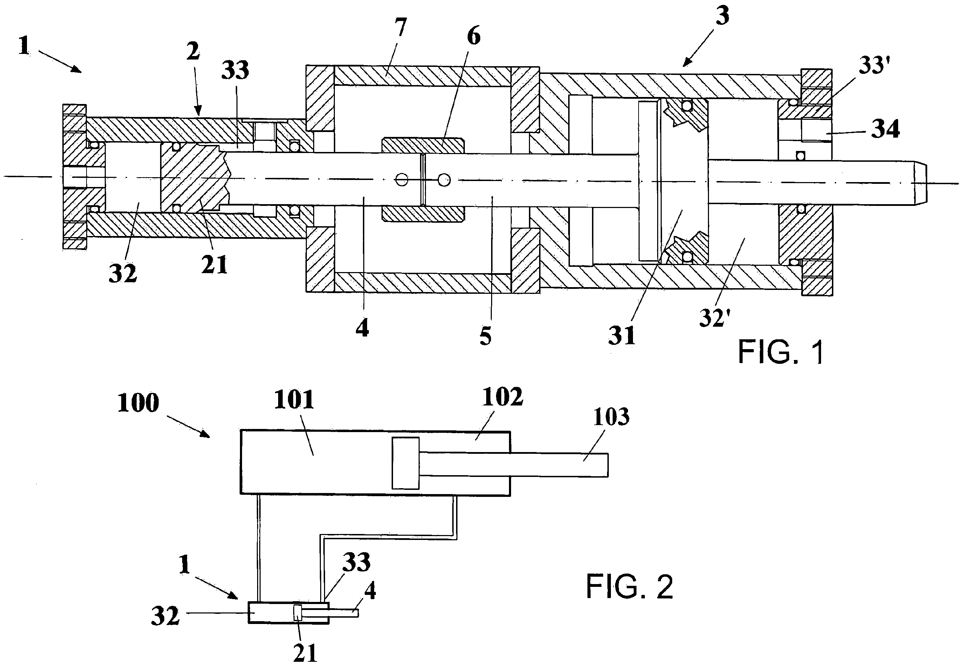

Figure 1 is a cross-sectional view of the pressure compensator according to the present invention; and
Figure 2 shows an application example of the subject pressure compensator to an oleodynamic cylinder.

### DESCRIPTION OF THE PREFERRED EMBODIMENTS

With reference to the number references of the above mentioned figures, the pressure compensator, particularly for oleodynamic applications, according to the present invention, which has been generally indicated by the reference number 1, comprises two cylinders: a compensator cylinder 2 in which is slidingly engaged a first piston 21, comprising a first piston rod 4, and a reducing cylinder 3, in which is slidingly engaged a second piston 31, comprising a second piston rod 5, axially connected to the first piston rod 4 through a coupling joint 6 arranged in a spider assembly 7.

The compensator cylinder 2 comprises a first chamber 32 and a second chamber 33 coupled to the first chamber 101 and the second chamber 102 of an oleodynamic main cylinder 100, respectively.

The size of the compensator cylinder 2 is so designed as to provide the same area ratio as the main cylinder 100, on the bottom and rod side, thereby, to a set position of the piston 103 of the main cylinder 100 corresponds a precise position of the first piston 21 of the compensator cylinder 2.

The reducing cylinder 3 comprises a low-pressure chamber 32' closed by a cover 33', having connecting means 34 for a pressure gauge, not shown in the figures.

Since the first piston rod 4 of the piston 21 of the compensator cylinder 2 is coupled to the second piston rod 5 of the second piston 31 of the reducing cylinder 3, the displacement of the second piston rod 5 in the reducing cylinder 3 either increases or decreases the pressure in the low-pressure chamber 32' in a proportional manner to the operating pressures in the main cylinder 100.

The size of the reducing cylinder 3, on the pressure gauge side, and of the compensator cylinder 2, on the annular section side, are so designed as to provide a ratio identical to that between the maximum pressure and a full-scale pressure gauge pressure.

Thus, for example, at a maximum pressure supplying said main cylinder 100, said pressure gauge displays a maximum pressure value, to a minimum supply pressure of said main cylinder 100 corresponding a minimum pressure value of said pressure gauge measuring scale, and so on proportionately for all the intermediate positions.

It has been found that the invention fully achieves the intended aim and objects.

In fact, the invention has provided a pressure compensator which, coupled to an oleodynamic cylinder, allows to provide a reduced pressure connection for a pressure gauge, while assuring that the reduced pressure value is accurately proportional to the operating pressure values of the oleodynamic cylinder at any position of said oleodynamic cylinder pistons.

In practicing the invention, the materials used, as well as the contingent size and shapes may be any, according to requirements.

## Claims

1. A circuit comprising: a pressure compensator (1), a high pressure main oleodynamic cylinder (100), a pressure gauge and said pressure compensator (1) connecting said high pressure main oleodynamic cylinder (100) and said pressure gauge, said main oleodynamic cylinder (100) having a first chamber (101) and a second chamber (102) in which a piston (103) of said main oleodynamic cylinder (100) slides, said pressure compensator comprises two cylinders (2, 3): a compensating cylinder (2) in which slides a first piston (21) comprising a first piston rod (4), and a reducing cylinder (3), in which slides a second piston (31) comprising a second piston rod (5); the compensating cylinder (2) being coupled to said main oleodynamic cylinder (100); said reducing cylinder (3) comprising at least a low pressure chamber (32') connected to said pressure gauge; a displacement of the piston rod of the reducing cylinder (3) either increasing or decreasing the pressure in said low pressure chamber, proportionately to the working pressures in the main oleodynamic cylinder (100), the first piston rod (4) of the first piston (21) of the compensating cylinder (2) being axially connected to the second piston rod (5) of the second piston (31) of the reducing cylinder (3) through a coupling joint (6) arranged in a spider assembly (7), the compensating cylinder (2) comprising a first chamber (32) and a second chamber (33), respectively coupled to said first chamber (101) and said second chamber (102) of said main oleodynamic cylinder (100), a size of said compensating cylinder (2) being designed as to provide a same ratio of the working surfaces of the main oleodynamic cylinder (100), at the bottom and piston rod sides, thereby, to a given position of the piston (103) of the main oleodynamic cylinder (100) corresponds a precise position of the first piston (21) of the compensating cylinder (2).

2. A circuit, according to claim 1, **characterized in that** said low pressure chamber (32') of said reducing cylinder (3) is closed by a cover (33') having connecting means (34) for said pressure gauge.

3. A circuit, according to claims 1 and 2, **characterized in that** said reducing cylinder (3), on a pressure gauge side, and said compensating cylinder (2), on an annular section side, have a size providing a pressure ratio identical to that between a maximum pressure and a full-scale pressure gauge pressure, and that, at a maximum pressure supplying said main oleodynamic cylinder (100), said pressure gauge displays a maximum pressure value: to a minimum supply pressure of said main oleodynamic cylinder (100) corresponding a minimum pressure value of said pressure gauge measuring scale, and so on proportionately for all the intermediate positions.

## Patentansprüche

1. Kreislauf, der Folgendes umfasst: einen Druckausgleicher (1), einen oleodynamischen Hochdruck-Hauptzylinder (100), einen Druckmesser und den Druckausgleicher (1), der den oleodynamischen Hochdruck-Hauptzylinder (100) und den Druckmesser verbindet, wobei der oleodynamische Hauptzylinder (100) eine erste Kammer (101) und eine zweite Kammer (102), in der ein Kolben (103) des oleodynamischen Hauptzylinders (100) gleitet, aufweist, wobei der Druckausgleicher zwei Zylinder (2, 3) umfasst: einen Ausgleichszylinder (2), in dem ein erster Kolben (21) gleitet, der eine erste Kolbenstange (4) umfasst, und einen Reduzierzylinder (3), in dem ein zweiter Kolben (31) gleitet, der eine zweite Kolbenstange (5) umfasst, wobei der Ausgleichszylinder (2) mit dem oleodynamischen Hauptzylinder (100) verbunden ist, wobei der Reduzierzylinder (3) wenigstens eine Niederdruckkammer (32') umfasst, die mit dem Druckmesser verbunden ist; wobei eine Verschiebung der Kolbenstange des Reduzierzylinders (3) den Druck in der Niederdruckkammer entweder steigert oder vermindert, proportional zu den Arbeitsdrücken in dem oleodynamischen Hauptzylinder (100), wobei die erste Kolbenstange (4) des ersten Kolbens (21) des Ausgleichszylinders (2) durch eine Kupplungsverbindung (6), die in einer Kreuzbaugruppe (7) angeordnet ist, mit der zweiten Kolbenstange (5) des zweiten Kolbens (31) des Ausgleichszylinders (2) verbunden ist, wobei der Ausgleichszylinder (2) eine erste Kammer (32) und eine zweite Kammer (33) umfasst, die jeweils mit der ersten Kammer (101) beziehungsweise der zweiten Kammer (102) des oleodynamischen Hauptzylinders (100) verbunden sind, wobei eine Größe des Ausgleichszylinders (2) so gestaltet ist, dass sie ein gleiches Verhältnis der Arbeitsflächen des oleodynamischen Hauptzylinders (100), an der Boden- und der Kolbenstangenseite, bereitstellt, wodurch einer gegebenen Stellung des Kolbens (103) des oleodynamischen Hauptzylinders (100) eine genaue Stellung des ersten Kolbens (21) des Ausgleichszylinders (2) entspricht.

2. Kreislauf nach Anspruch 1, **dadurch gekennzeichnet, dass** die Niederdruckkammer (32') des Reduzierzylinders (3) durch eine Abdeckung (33') verschlossen ist, die Verbindungsmittel (34) für den Druckmesser aufweist.

3. Kreislauf nach Anspruch 1 und 2, **dadurch gekennzeichnet, dass** der Reduzierzylinder (3), auf einer Druckmesserseite, und der Ausgleichszylinder (2), auf einer Seite einer ringförmigen Sektion, eine Größe aufweisen, die ein Druckverhältnis, identisch zu demjenigen zwischen einem maximalen Druck und einem Druckmesser-Skalenendwertdruck, bereitstellt, und dass, bei einem maximalen Druck, der den oleodynamischen Hauptzylinder (100) speist, der Druckmesser einen maximalen Druckwert anzeigt: bis zu einem minimalen Eingangsdruck des oleodynamischen Hauptzylinders (100), der einem minimalen Druckwert der Druckmesser-Messskala entspricht, und so weiter für alle dazwischenliegenden Stellungen.

## Revendications

1. Circuit comprenant : un compensateur de pression (1), un vérin oléodynamique haute pression principal (100), un indicateur de pression et ledit compensateur de pression (1) reliant ledit vérin oléodynamique haute pression principal (100) et ledit indicateur de pression, ledit vérin oléodynamique principal (100) ayant une première chambre (101) et une deuxième chambre (102) dans lesquelles coulisse un piston (103) dudit vérin oléodynamique principal (100), ledit compensateur de pression comprend deux vérins (2, 3) : un vérin de compensation (2) dans lequel coulisse un premier piston (21) comprenant une première tige de piston (4), et un vérin de réduction (3) dans lequel coulisse un deuxième piston (31) comprenant une deuxième tige de piston (5) ; le vérin de compensation (2) étant couplé avec ledit vérin oléodynamique principal (100) ; ledit vérin de réduction (3) comprenant au moins une chambre basse pression (32') reliée audit indicateur de pression ; un déplacement de la tige de piston du vérin de réduction (3) augmentant ou diminuant la pression dans ladite chambre basse pression de manière proportionnelle aux pressions de travail dans le vérin oléodynamique principal (100), la première tige de piston (4) du premier piston (21) du vérin de compensation (2) étant reliée axialement à la deuxième tige de piston (5) du deuxième piston (31) du vérin de réduction (3) via un joint d'accouplement (6) disposé dans un assemblage de croisillon (7), le vérin de compensation (2) comprenant une première chambre (32) et une deuxième chambre (33) respectivement couplées avec ladite première chambre (101) et ladite deuxième chambre (102) dudit vérin oléodynamique principal (100), une taille dudit vérin de compensation (2) étant conçue de manière à fournir un même rapport des surfaces de travail du vérin oléodynamique principal (100), sur les côtés du fond et de la tige de piston, de ce fait, à une position donnée du piston (103) du vérin oléodynamique principal (100) correspond une position précise du premier piston (21) du vérin de compensation (2).

2. Circuit selon la revendication 1, **caractérisé en ce que** ladite chambre basse pression (32') dudit vérin de réduction (3) est fermée par un couvercle (33') ayant un moyen de raccordement (34) pour ledit indicateur de pression.

3. Circuit selon les revendications 1 et 2, **caractérisé en ce que** ledit vérin de réduction (3), sur un côté d'indicateur de pression, et ledit vérin de compensation (2), sur un côté de section annulaire, ont une taille fournissant un rapport de pression identique à celui entre une pression maximale et une pression d'indicateur de pression de déviation totale, et **en ce qu'**à une pression maximale alimentant ledit vérin oléodynamique principal (100), ledit indicateur de pression affiche une valeur de pression maximale : à une pression d'alimentation minimale dudit vérin oléodynamique principal (100) correspondant une valeur de pression minimale de ladite échelle de mesure d'indicateur de pression, et ainsi de suite de manière proportionnelle pour toutes les positions intermédiaires.
